# EUROPÄISCHE PATENTSCHRIFT

(11) **EP 2 503 483 B1**
(45) Veröffentlichungstag und Bekanntmachung des Hinweises auf die Patenterteilung: **10.05.2017**
(21) Anmeldenummer: 12002063.1
(22) Anmeldetag: 23.03.2012
(51) Int. Cl.: G06F 21/52

(54) **Kommunikationssystem mit Sicherheitsvorrichtung, sowie Verfahren hierzu**
Communication system with safety device and method for same
Système de communication avec dispositif de sécurité et procédé correspondant

(30) Priorität: 25.03.2011 DE 102011015123
(43) Veröffentlichungstag der Anmeldung: 26.09.2012
(73) Patentinhaber: G DATA SOFTWARE AG, 44799 Bochum (DE)
(72) Erfinder: Büscher, Armin, San Diego, CA 92131 (US); Siebert, Thomas, 46236 Bottrop (DE)
(74) Vertreter: Neuwald, Philipp

(56) Entgegenhaltungen:
- Joanna Rutkowska: "System Virginity Verifier", Hack In The Box Security Conference, 29. September 2005 (2005-09-29), XP55029881, Kuala Lumpur, Malaysia Gefunden im Internet: URL:http://www.bandwidthco.com/whitepapers /compforensics/malware/rk/System Virginity Verifier.pdf [gefunden am 2012-06-14]
- Michael A. Davis ET AL: "Hacking Exposed Malware and Rootkits" In: "Hacking Exposed Malware and Rootkits", 1. Oktober 2009 (2009-10-01), Macgraw-Hill, XP55029937, Seiten 283-318, * Seite 291 - Seite 294 *
- Wikipedia: "Rootkit", , 15. März 2011 (2011-03-15), XP55029946, Gefunden im Internet: URL:http://en.wikipedia.org/w/index.php?ti tle=Rootkit&oldid=418875407 [gefunden am 2012-06-14]

## Beschreibung

Die vorliegende Erfindung betrifft ein Kommunikationssystem mit einer Sicherheitsvorrichtung, eine Sicherheitsvorrichtung sowie ein Verfahren hierzu. Kommunikationssysteme, insbesondere rechner- bzw. computergestützte Kommunikationssysteme nutzen oftmals Webbrowseranwendungen, um mit anderen Kommunikationssystemen oder Recheneinheiten zu kommunizieren, insbesondere Daten auszutauschen.

Dabei verwenden die Webbrowseranwendungen Systembibliotheken, in denen Informationen zu Systemschnittstellen hinterlegt sind. Diese Systemschnittstellen werden oftmals manipuliert, beispielsweise durch gezielte Angriffe unter Einsatz von Schadsoftware. Derartige Angriffe ermöglichen es, das Kommunikationssystem zu beschädigen, insbesondere hinsichtlich der Betriebssicherheit zu beeinträchtigen oder das Kommunikationssystem teilweise oder vollständig zu blockieren. Auch kann die Schadsoftware benutzt werden, um Betriebsdaten des Kommunikationssystems auszuspähen. Aus dem Stand der Technik sind Verfahren zur Erkennung von Rootkits und Malware durch Abgleich des Istzustandes von Systembibliotheken mit einem Sollzustand bekannt, etwa Joanna Rutkowska: "System Virginity Verifier",Hack In The Box Security Conference, 29. September 2005 (2005-09-29) http://www.bandwidthco.com/whitepapers/compforensics/malware/rk/. Diese Verfahren beziehen sich jedoch auf den Abgleich einer vollständigen Systembibliothek und geht nicht auf deren besondere Eigenschaften ein.

Es ist daher die Aufgabe der vorliegenden Erfindung, ein Kommunikationssystem mit einer Sicherheitsvorrichtung, eine Sicherheitsvorrichtung sowie ein Verfahren hierzu in vorteilhafter Weise weiter zu bilden, insbesondere dahingehend, dass Beschädigungen des Kommunikationssystems einfach, schnell und zuverlässig erkannt werden können.

Diese Aufgabe wird erfindungsgemäß gelöst durch ein Kommunikationssystem mit den Merkmalen des Anspruchs 1. Danach ist vorgesehen, dass ein Kommunikationssystem mit wenigstens einem Kommunikationsmittel, mittels dessen das Kommunikationssystem mit wenigstens einer weiteren Recheneinheit und/oder einem weiteren Kommunikationssystem verbindbar ist, mit wenigstens einem ersten Speichermittel, mit wenigstens einem zweiten Speichermittel und mit wenigstens einer Sicherheitsvorrichtung versehen ist, wobei auf dem ersten und dem zweiten Speichermittel identische Informationen hinterlegt sind und wobei anhand eines Abgleichs dieser Informationen mittels der Sicherheitsvorrichtung eine Beschädigung des Kommunikationssystems feststellbar st, wobei das erste Speichermittel ein erster Speicher mit einer Systembibliothek ist, in der als Information wenigstens ein Verzeichnis der durch die Systembibliothek bereitgestellten Systemschnittstellen hinterlegt ist und dass das zweite Speichermittel ein zweiter Speicher mit einer Kopie der Systembibliothek des ersten Speichers ist, in der als Information wenigstens ein Verzeichnis der durch die Systembibliothek bereitgestellten Systemschnittstellen hinterlegt ist,dadurch gekennzeichnet,dass ein drittes Speichermittel vorgesehen ist und dass einzelne beschädigte Systemschnittstellen durch wenigstens eine Eigenschaft der Systemschnittstellen identifizierbar sind, die unabhängig vom Kommunikationssystem und/oder Eigenschaften des Kommunikationssystems ist, wobei wenigstens eine Eigenschaft in dem dritten Speichermittel als Information ablegbar oder abgelegt ist und wobei über diese Information mittels der Sicherheitsvorrichtung eine Prüfsumme bildbar ist, und dass mittels der Prüfsumme die Art der Beschädigung ermittelbar ist, indem die Prüfsumme mittels der Sicherheitsvorrichtung mit in der Sicherheitsvorrichtung hinterlegten, bereits bekannten Prüfsummen vergleichbar ist.

Durch ein derartiges Kommunikationssystem kann vorteilhaft das technische Problem der Vermeidung einer Beschädigung des Kommunikationssystems gelöst werden, nämlich durch das technische Mittel einer Sicherheitsvorrichtung, mittels derer ein Abgleich entsprechender Informationen, insbesondere redundant vorgehaltener Informationen, und hierdurch ein Erkennen einer Beschädigung einfach und zuverlässig ermöglicht ist. Eine Veränderung und/oder Manipulation der Informationen erlaubt eine sichere und zuverlässige Erkennung einer Beschädigung des Kommunikationssystems.

Die Feststellbarkeit einer Beschädigung mittels der Sicherheitsvorrichtung ist grundsätzlich auch dann gegeben, wenn das Kommunikationssystem nicht und/oder nur zeitweilig nicht mit wenigstens einer weiteren Recheneinheit und/oder einem weiteren Kommunikationssystem verbunden ist. Eine ständige Verbindung des Kommunikationssystems mit wenigstens einer weiteren Recheneinheit und/oder einem weiteren Kommunikationssystem ist nicht zwingend erforderlich.

Der Begriff einer Beschädigung ist dabei weit zu verstehen und auszulegen. Beispielsweise kann eine Beschädigung darin bestehen, dass eine Schadsoftware auf das Kommunikationssystem aufgespielt wurde und/oder dass eine oder mehrere Funktionen des Kommunikationssystems beeinträchtigt sind. Eine derartige Beeinträchtigung kann auch bereits darin bestehen, dass Informationen unbefugt ausgelesen werden können, z. B. in Folge der Aufspielung einer Schadsoftware.

So kann mittels der Sicherheitsvorrichtung eine Beschädigung des Kommunikationssystems feststellbar sein, wenn der Abgleich der Informationen ergibt, dass diese nicht übereinstimmen. Sofern der Abgleich ergibt, dass eine Übereinstimmung der Informationen besteht, kann vorzugsweise mittels der Sicherheitsvorrichtung keine Beschädigung feststellbar sein. Vorzugsweise kann dem Nutzer des Kommunikationssystems der aktuelle Betriebszustand anzeigbar sein, beispielsweise bei keiner Beschädigung in Form einer Mitteilung und/oder eines Signales, die einblendbar sind, und im Fall einer Beschädigung in Form einer Warnmeldung.

Eine sichere und zuverlässige Erkennung einer Beschädigung des Kommunikationssystems ermöglicht es wiederum in vorteilhafter Weise, z. B. umgehend die Beschädigung zu reparieren. Dies kann beispielsweise derart geschehen, dass im Falle einer Beschädigung durch ungewolltes Aufspielen einer Schadsoftware dies mittels der Sicherheitsvorrichtung automatisch erkennbar ist und die Ausführung der Schadsoftware automatisch unterbunden und z. B. eine Entfernung der Schadsoftware durchgeführt wird bzw. durchführbar ist.

Das Kommunikationssystem kann eine Recheneinheit sein und/oder eine Recheneinheit umfassen. Eine derartige Recheneinheit kann beispielsweise ein Computer, Laptop usw. sein, der aber auch in ein übergeordnetes Kommunikationssystem eingebettet sein kann.

Das Kommunikationsmittel kann eine Webbrowseranwendung umfassen oder als Webbrowseranwendung ausgeführt sein. Diese Webbrowseranwendung weist üblicherweise Systembibliotheken auf, die Informationen für den Betrieb des Kommunikationssystems aufweisen. Beispielsweise kann die Webbrowseranwendung ein herkömmlicher Webbrowser wie der Microsoft Internet Explorer, Mozilla Firefox und/oder Google Chrome sein.

Denkbar ist ferner, dass das Kommunikationsmittel weiter entsprechende Datenaustauschmittel wie Datenübertragungsschnittstellen aufweist. Derartige Datenübertragungsschnittstellen können einen drahtgebundenen und/oder drahtlosen Datenaustausch ermöglichen.

Die Sicherheitsvorrichtung kann eine Erweiterung des Kommunikationsmittels sein. Beispielsweise kann es vorteilhaft vorgesehen sein, dass die Sicherheitsvorrichtung als Webbrowsererweiterung ausgeführt ist.

Die in den Speichern abgelegte Information kann eine Information betreffend Charakteristika des Kommunikationssystems sein oder eine derartige Information umfassen.

Es ist denkbar, dass das erste Speichermittel ein Arbeitsspeicher ist und das zweite Speichermittel ein Datenspeicher ist. Beispielsweise kann der Arbeitsspeicher ein RAM-Speicher und der Datenspeicher ein Speicher auf einer Festplatte sein. Dabei kann es sich um eine lokale Festplatte handeln. Denkbar ist aber auch, dass das zweite Speichermittel ein Speicher auf einem nicht lokalen Speicher ist. Insbesondere kann vorgesehen sein, dass eine Einspeicherung der Informationen in den ersten Speicher bei Inbetriebnahme des Kommunikationssystems erfolgt und die Informationen auf dem Festplattenspeicher stets vorhanden sind.

Denkbar ist auch, dass das Speichermittel, der RAM-Speicher und/oder der Festplattenspeicher nur ein Teil des Speicherplatzes in einem dem Kommunikationssystem zur Verfügung stehenden oder dem Kommunikationssystem zugehörigen RAM-Speicherelement bzw. einer Festplatte des Kommunikationssystems ist bzw. sind.

Darüber hinaus kann vorgesehen sein, dass das erste Speichermittel ein erster Speicher mit einer Systembibliothek ist, in der als Information wenigstens ein Verzeichnis der durch die Systembibliothek bereitgestellten Systemschnittstellen hinterlegt ist und dass das zweite Speichermittel ein zweiter Speicher mit einer Kopie der Systembibliothek des ersten Speicher ist, in der als Information wenigstens ein Verzeichnis der durch die Systembibliothek bereitgestellten Systemschnittstellen hinterlegt ist.

Es ist weiter denkbar, dass eine Beschädigung der Systemschnittstelle, insbesondere eine Manipulation der Systemschnittstelle, mittels der Sicherheitsvorrichtung durch zumindest teilweisen Abgleich des ersten Speichers mit dem zweiten Speicher erkennbar ist. Mittels der Sicherheitsvorrichtung kann so beispielsweise eine Überwachung der im Webbrowser verwendeten Systembibliotheken, insbesondere ein Schutz vor Manipulation der zur Kommunikation verwendeten Systembibliotheken bzw. der in den Systembibliotheken hinterlegten Systemschnittstellen erfolgen. Dies ist insbesondere deshalb vorteilhaft, weil die Systemschnittstellen dieser Bibliotheken häufig von Schadsoftware bzw. unter Einsatz von Schadsoftware manipuliert werden, um Benutzereingaben, etwa von Benutzernamen und Passwörtern in Webseitenformularen vor der Verschlüsselung durch das Kommunikationssystem abzufangen.

Des Weiteren kann vorgesehen sein, dass die Systemschnittstellen Einsprungpunkte aufweisen und dass die Informationen betreffend die Einsprungpunkte mittels der Sicherheitsvorrichtung eigenständig berechenbar und mittels der das Kommunikationssystem berechneten Einsprungpunkte vergleichbar sind, wobei insbesondere eine Beschädigung mittels der Sicherheitsvorrichtung feststellbar ist, wenn eine Abweichung der durch die Sicherheitsvorrichtung berechneten Einsprungpunkte mit den durch das Kommunikationssystem berechneten Einsprungpunkten mittels der Sicherheitsvorrichtung ermittelbar ist bzw. ermittelt wird. Grundsätzlich ist aber auch denkbar, dass an Stelle von Einsprungpunkten andere vergleichbare bzw. geeignete vordefinierte Datenstrukturen herangezogen werden. Der Abgleich und die Erkennung von Abweichungen dieser Datenstrukturen und damit Beschädigungen des Kommunikationssystems können hierdurch entsprechend dem vorgenannten Vorgehen durch Vergleich der Einsprungpunkte erkannt werden.

Ferner ist denkbar, dass ein drittes Speichermittel vorgesehen ist und dass eine beschädigte Systemschnittstelle durch wenigstens eine Eigenschaft der Systemschnittstelle identifizierbar ist, die unabhängig vom Kommunikationssystem und/oder Eigenschaften des Kommunikationssystems ist, wobei wenigstens eine Eigenschaft in dem dritten Speicherelement als Information ablegbar oder abgelegt ist und wobei über diese Information mittels der Sicherheitsvorrichtung eine Prüfsumme bildbar ist. Diese wenigstens eine Eigenschaft kann vorteilhafterweise in einer festgelegten Ordnung, z. B. in alphabetischer Reihenfolge in einer Datenstruktur abgelegt werden. Daraufhin kann eine Prüfsumme (Hashwert) über diese Datenstruktur gebildet werden. Diese Eigenschaft der Systemschnittstelle kann beispielsweise der Name der Systemschnittstelle sein, der vorteilhafterweise systemunabhängig stets derselbe ist. Somit kann also eine manipulierte Schnittstelle durch Eigenschaften wie z. B. den Namen der Systemschnittstelle identifiziert werden, die unabhängig vom konkreten System sind. Dies erlaubt es vorteilhafterweise, systemunabhängig eine Erkennung mittels der Sicherheitsvorrichtung vornehmen zu können. Möglich ist auch, dass das dritte Speichermittel nur ein Teil des Speicherplatzes in einem dem Kommunikationssystem zur Verfügung stehenden oder dem Kommunikationssystem zugehörigen Speicher ist, wobei es nicht zwingend erforderlich ist, dass es sich bei dem dritten Speicherelement um einen lokalen Speicherplatz handelt. Das dritte Speichermittel kann auch in vorteilhafter Ausführung Bestandteil des zweiten Speichermittels oder identisch mit dem zweiten Speichermittel sein.

Außerdem kann vorgesehen sein, dass mittels der Prüfsumme die Art der Beschädigung ermittelbar ist, indem die Prüfsumme mittels der Sicherheitsvorrichtung mit in der Sicherheitsvorrichtung hinterlegten, bereits bekannten Prüfsummen vergleichbar ist. Grundsätzlich ist aber auch denkbar, die bereits bekannte Prüfsumme nicht in der Sicherheitsvorrichtung, sondern in einem gesonderten Speichermittel zu hinterlegen.

Insbesondere ergibt sich nunmehr durch das Kommunikationssystem der Vorteil, dass durch die Sicherheitsvorrichtung bzw. mittels der Sicherheitsvorrichtung durch das Kommunikationssystem während des Betriebs des Kommunikationssystems die z. B. von einer Schadsoftware hervorgerufene Beschädigung erkannt werden kann. Insbesondere kann es sich bei diesen Beschädigungen um Manipulationen von Systembibliotheken des Kommunikationsmittels, insbesondere der Webbrowseranwendung handeln. Durch die Sicherheitsvorrichtung kann die Beschädigung, insbesondere die Manipulation für die Dauer der Ausführung rückgängig machbar sein und der Benutzer des Kommunikationssystems entsprechend benachrichtigbar sein. Weiter ist möglich, dass der Benutzer mittels der Sicherheitsvorrichtung bei erfolgreicher Identifizierung der Schadsoftware mittels Prüfsumme sofern verfügbar auf bereitgestellte Werkzeuge zur permanenten Entfernung der Schadsoftware oder der durch die Schadsoftware erzeugten Produkte vom Kommunikationssystem verweisbar ist.

Des Weiteren betrifft die vorliegende Erfindung eine Sicherheitsvorrichtung mit den Merkmalen des Anspruchs 8. Danach ist vorgesehen, dass eine Sicherheitsvorrichtung mit den Sicherheitsvorrichtungsmerkmalen nach einem der vorhergehenden Ansprüche ausgeführt ist.

Bei der Sicherheitsvorrichtung kann es sich um ein Speicherelement handeln, auf dem insbesondere die funktionalen Merkmale der Sicherheitsvorrichtung hinterlegt sind. Auch kann vorgesehen sein, dass die Sicherheitsvorrichtung ein Computerprogrammprodukt ist. Die Sicherheitsvorrichtung ist vorzugsweise eine Sicherheitsvorrichtung, die zur Verwendung in einem Kommunikationssystem nach einem der Ansprüche 1 bis 7 vorgesehen ist.

Darüber hinaus betrifft die vorliegende Erfindung ein Verfahren zur Ermittlung einer Beschädigung eines Kommunikationssystems. Danach ist vorgesehen, dass bei einem Verfahren zur Ermittlung einer Beschädigung eines Kommunikationssystems mit wenigstens einem Kommunikationsmittel, mittels dessen das Kommunikationssystem mit wenigstens einer weiteren Recheneinheit und/oder einem weiteren Kommunikationssystem verbindbar ist, mit wenigstens einem ersten Speichermittel, mit wenigstens einem zweiten Speichermittel und mit wenigstens einer Sicherheitsvorrichtung, auf dem ersten und dem zweiten Speichermittel identische Informationen hinterlegt sind und anhand eines Abgleichs dieser Informationen mittels der Sicherheitsvorrichtung eine Beschädigung des Kommunikationssystems feststellbar ist.

Ferner kann vorteilhaft vorgesehen sein, dass das Verfahren mit einem Kommunikationssystem nach einem der Ansprüche 1 bis 7 durchgeführt wird.

Weitere Einzelheiten und Vorteile der Erfindung sollen nun anhand eines nachstehend beschriebenen Ausführungsbeispiels näher erläutert werden.

Eine vorteilhafte Ausführungsform eines erfindungsgemäßen Kommunikationssystems kann beispielsweise in einfacher Ausführung ein privater Rechner wie ein PC, Tablet-PC, ein Laptop oder ein Netbook sein, der mit dem Internet verbunden oder verbindbar ist. Das Kommunikationsmittel des Kommunikationssystems umfasst eine Webbrowseranwendung sowie eine oder mehrere Schnittstellen, mittels derer das Kommunikationssystem mit dem Internet und/oder einem anderen Netzwerk verbindbar ist.

Grundsätzlich ist auch denkbar, dass die vorliegende Erfindung im Zusammenhang mit einem Smartphone, einer Gaming-Konsole oder einem vergleichbaren Gerät ausgeführt werden kann. Vorzugsweise ist das Kommunikationssystem in diesem Fall das Smartphone, die Gaming-Konsole oder das vergleichbare Gerät.

Die Sicherheitsvorrichtung ist als Erweiterungsobjekt der Webbrowseranwendung ausgeführt und auf einem Speicher des Kommunikationssystems dauerhaft hinterlegt bzw. installiert.

Schädliche Software manipuliert häufig die Einsprungspunkte in durch das Betriebssystem bereitgestellten Systemschnittstellen (APIs). Ziel des vorliegenden Konzepts ist es, solche Manipulationen zu erkennen und die Schadsoftware anhand der Art der Manipulationen zu identifizieren.

Eine Programmbibliothek wird in einen zu untersuchenden Zielprozess geladen und prüft darauf, ob Einsprungspunkte in Systemschnittstellen bestimmter Systembibliotheken geändert wurden. Dabei sind folgende möglichen Änderungen zu beachten:
(1) Systembibliotheken enthalten ein Verzeichnis der durch sie bereitgestellten Systemschnittstellen. Dieses Verzeichnis kann durch Schädlinge manipuliert werden, nachdem die Systembibliothek in den Speicher geladen wurde. Solche Manipulationen können erkannt werden, indem das Verzeichnis im Speicher mit dem Verzeichnis in der Festplattenkopie der Systembibliothek verglichen wird.
(2) Manipulationen des Codes der Systemschnittstellen ("Inline-Hooking") werden durch Abgleich mit den entsprechenden Codefragmenten der Festplattenkopie der Systembibliothek erkannt.
(3) Weitere Manipulationen (z. B. durch die Ladeprozedur des Betriebssystems) werden erkannt, indem die durch das Betriebssystem berechneten Einsprungspunkte der Systemschnittstellen mit eigenständig berechneten Einsprungspunkten verglichen werden.

Die einzelnen manipulierten Systemschnittstellen werden durch Eigenschaften identifiziert, die unabhängig vom konkreten System sind (z. B. der Name der Systemschnittstellen). Diese Eigenschaften werden in einer festgelegten Ordnung (z. B. alphabetisch) in einer Datenstruktur abgelegt. Daraufhin wird eine Prüfsumme (Hashwert) über diese Datenstruktur gebildet.

Die entstandene Prüfsumme kann zur Identifizierung des Schädlings verwendet werden, indem die Prüfsumme mit bereits bekannten Prüfsummen verglichen wird.

Die Sicherheitsvorrichtung kann in vorteilhafter Ausgestaltung eine Erweiterung der Webbrowser-Anwendung Microsoft Internet Explorer auf dem Betriebssystem Microsoft Windows sein. Eine Umsetzung als Erweiterung für Webbrowser anderer Hersteller, wie z. B. Mozilla Firefox und Google Chrome, ist mit technisch sehr ähnlichem Aufbau möglich.

Zweck der Webbrowser-Erweiterung ist die Überwachung der im Webbrowser verwendeten Systembibliotheken, insbesondere der Schutz vor Manipulation der zur Kommunikation verwendeten Bibliotheken. Dies ist nötig, da die Systemschnittstellen dieser Bibliotheken häufig von schädlicher Software manipuliert werden, um Benutzereingaben, etwa von Benutzernamen und Passwörtern in Webseitenformularen, vor der Verschlüsselung durch das System abzufangen.

Die Erweiterung erkennt während des Betriebs die von schädlicher Software getätigten Manipulationen an Systembibliotheken im Webbrowser und macht diese für die Dauer der Ausführung rückgängig, benachrichtigt den Benutzer und verweist ihn bei erfolgreicher Identifizierung der schädlichen Software mittels Prüfsumme sofern verfügbar auf bereitgestellte Werkzeuge zum permanenten Entfernen der verursachenden Schaddateien vom System.

## Patentansprüche

1. Kommunikationssystem mit wenigstens einem Kommunikationsmittel, mittels dessen das Kommunikationssystem mit wenigstens einer weiteren Recheneinheit und/oder einem weiteren Kommunikationssystem verbindbar ist, mit wenigstens einem ersten Speichermittel, mit wenigstens einem zweiten Speichermittel und mit wenigstens einer Sicherheitsvorrichtung, wobei auf dem ersten und dem zweiten Speichermittel identische Informationen hinterlegt sind und wobei anhand eines Abgleichs dieser Informationen mittels der Sicherheitsvorrichtung eine Beschädigung des Kommunikationssystems feststellbar ist, wobei das erste Speichermittel ein erster Speicher mit einer Systembibliothek ist, in der als Information wenigstens ein Verzeichnis der durch die Systembibliothek bereitgestellten Systemschnittstellen hinterlegt ist und dass das zweite Speichermittel ein zweiter Speicher mit einer Kopie der Systembibliothek des ersten Speichers ist, in der als Information wenigstens ein Verzeichnis der durch die Systembibliothek bereitgestellten Systemschnittstellen hinterlegt ist,
**dadurch gekennzeichnet,**
**dass** ein drittes Speichermittel vorgesehen ist und dass einzelne beschädigte Systemschnittstellen durch wenigstens eine Eigenschaft der Systemschnittstellen identifizierbar sind, die unabhängig vom Kommunikationssystem und/oder Eigenschaften des Kommunikationssystems ist, wobei wenigstens eine Eigenschaft in dem dritten Speichermittel als Information ablegbar oder abgelegt ist und wobei über diese Information mittels der Sicherheitsvorrichtung eine Prüfsumme bildbar ist, und dass mittels der Prüfsumme die Art der Beschädigung ermittelbar ist, indem die Prüfsumme mittels der Sicherheitsvorrichtung mit in der Sicherheitsvorrichtung hinterlegten, bereits bekannten Prüfsummen vergleichbar ist.

2. Kommunikationssystem nach Anspruch 1, **dadurch gekennzeichnet, dass** das erste Speichermittel ein Arbeitsspeicher ist und das zweite Speichermittel ein Datenspeicher ist.

3. Kommunikationssystem nach Anspruch 1, **dadurch gekennzeichnet, dass** eine Beschädigung der Systemschnittstelle, insbesondere eine Manipulation der Systemschnittstelle, mittels der Sicherheitsvorrichtung durch zumindest teilweisen Abgleich des ersten Speichers mit dem zweiten Speicher erkennbar ist.

4. Kommunikationssystem nach Anspruch 1 oder 3, **dadurch gekennzeichnet, dass** die Systemschnittstellen Einsprungpunkte aufweisen und dass die Informationen betreffend die Einsprungpunkte mittels der Sicherheitsvorrichtung eigenständig berechenbar und mittels der das Kommunikationssystem berechneten Einsprungpunkte vergleichbar sind, wobei insbesondere eine Beschädigung mittels der Sicherheitsvorrichtung feststellbar ist, wenn eine Abweichung der durch die Sicherheitsvorrichtung berechneten Einsprungpunkte mit den durch das Kommunikationssystem berechneten Einsprungpunkten mittels der Sicherheitsvorrichtung ermittelbar ist bzw. ermittelt wird.

5. Sicherheitsvorrichtung mit den Sicherheitsvorrichtungsmerkmalen nach einem der vorhergehenden Ansprüche.

6. Verfahren zur Ermittlung einer Beschädigung eines Kommunikationssystems mit wenigstens einem Kommunikationsmittel, mittels dessen das Kommunikationssystem mit wenigstens einer weiteren Recheneinheit und/oder einem weiteren Kommunikationssystem verbindbar ist, mit wenigstens einem ersten Speichermittel, mit wenigstens einem zweiten Speichermittel und mit wenigstens einer Sicherheitsvorrichtung, wobei auf dem ersten und dem zweiten Speichermittel identische Informationen hinterlegt sind und wobei anhand eines Abgleichs dieser Informationen mittels der Sicherheitsvorrichtung eine Beschädigung des Kommunikationssystems feststellbar ist, wobei das Verfahren mit einem Kommunikationssystem nach einem der Ansprüche 1 bis 5 durchgeführt wird.

## Claims

1. A communications system having at least one communications means by means of which the communications system can be connected to at least one further processing unit and/or to a further communications system, having at least one first memory means, having at least one second memory means and having at least one security apparatus, wherein identical information is stored on the first and second memory means and wherein damage to the communications system can be determined with reference to a comparison of this information by means of the security apparatus, wherein the first memory means is a first memory having a system library in which at least one directory of the system interfaces provided by the system library is stored as information and that the second memory means is a second memory having a copy of the system library of the first memory in which at least one directory of the system interfaces provided by the system library is stored as information,
**characterized in that**
a third memory means is provided and that single damaged system interfaces can be identified by at least one property of the system interfaces which is independent of the communications system and/or of properties of the communications system, with at least one property being able to be stored or being stored as information in the third memory means and with a checksum being able to be formed by means of the security apparatus using this information; and that the type of damage can be determined by means of the checksum **in that** the checksum is comparable by means of the security apparatus with checksums stored in the security apparatus and already known.

2. A communications system in accordance with claim 1, **characterized in that** the first memory means is a working memory and the second memory means is a data store.

3. A communications system in accordance with claim 1, **characterized in that** damage to the system interface, in particular a manipulation of the system interface, can be recognized by means of the security apparatus by at least a partial comparison of the first memory with the second memory.

4. A communications system in accordance with claim 1 or claim 3, **characterized in that** the system interfaces have entry points and that the information relating to the entry points can be calculated independently by means of the security apparatus and can be compared by means of the entry points calculated by the communications system, with in particular damage being able to be detected by means of the security apparatus when a deviation of the entry points calculated by the security apparatus from the entry points calculated by the communications system can be determined or is determined by means of the security apparatus.

5. A security apparatus having the security apparatus features in accordance with one of the preceding claims.

6. A method for determining damage to a communications system having at least one communications means by means of which the communications system can be connected to at least one further processing unit and/or to a further communications system, having at least one first memory means, having at least one second memory means and having at least one security apparatus, wherein identical information is stored on the first and second memory means and wherein damage to the communications system can be determined with reference to a comparison of this information by means of the security apparatus, wherein the method is carried out using a communications system in accordance with one of the claims 1 to 5.

## Revendications

1. Système de communication comprenant au moins un moyen de communication, au moyen duquel le système de communication peut être connecté à au moins une autre unité de calcul et/ou un autre système de communication, comprenant au moins un premier moyen de stockage, au moins un deuxième moyen de stockage et au moins un dispositif de sécurité, des informations identiques étant enregistrées sur le premier et le deuxième moyen de stockage et un endommagement du système de communication pouvant être constaté à l'aide d'une comparaison de ces informations au moyen du dispositif de sécurité, le premier moyen de stockage étant une première mémoire comprenant une bibliothèque système, dans laquelle au moins un répertoire des interfaces système fournies par la bibliothèque système est enregistré en tant qu'information et en ce que le deuxième moyen de stockage est une seconde mémoire comprenant une copie de la bibliothèque système de la première mémoire, dans laquelle au moins un répertoire des interfaces système fournies par la bibliothèque système est enregistré en tant qu'information,
**caractérisé en ce que**
un troisième moyen de stockage est prévu et **en ce que** des interfaces système individuelles endommagées sont identifiables par au moins une propriété des interfaces système, qui est indépendante du système de communication et/ou de propriétés du système de communication, au moins une propriété pouvant être ou étant stockée dans le troisième moyen de stockage en tant qu'information, et une somme de contrôle pouvant être formée sur cette information au moyen du dispositif de sécurité, et **en ce que** le type d'endommagement peut être déterminé au moyen de la somme de contrôle, par le fait que la somme de contrôle peut être comparée à des sommes de contrôle déjà connues enregistrées dans le dispositif de sécurité, au moyen du dispositif de sécurité.

2. Système de communication selon la revendication 1, **caractérisé en ce que** le premier moyen de stockage est une mémoire de travail et le deuxième moyen de stockage est une mémoire de données.

3. Système de communication selon la revendication 1, **caractérisé en ce qu'**un endommagement de l'interface système, en particulier une manipulation de l'interface système, est reconnaissable au moyen du dispositif de sécurité par une comparaison au moins partielle de la première mémoire et de la deuxième mémoire.

4. Système de communication selon la revendication 1 ou 3, **caractérisé en ce que** les interfaces système comportent des points d'entrée et **en ce que** les informations concernant les points d'entrée peuvent être calculées de manière autonome au moyen du dispositif de sécurité et comparées au moyen des points d'entrées calculés par le système de communication, un endommagement pouvant en particulier être constaté au moyen du dispositif de sécurité quand un écart entre les points d'entrée calculés par le dispositif de sécurité et les points d'entrée calculés par le système de communication peut être ou est déterminé au moyen du dispositif de sécurité.

5. Dispositif de sécurité comprenant les caractéristiques du dispositif de sécurité selon l'une des revendications précédentes.

6. Procédé de détermination d'un endommagement d'un système de communication comprenant au moins un moyen de communication, au moyen duquel le système de communication peut être connecté à au moins une autre unité de calcul et/ou un autre système de communication, comprenant au moins un premier moyen de stockage, au moins un deuxième moyen de stockage et au moins un dispositif de sécurité, des informations identiques étant enregistrées sur le premier et le deuxième moyen de stockage, et un endommagement du système de communication pouvant être constaté à l'aide d'une comparaison de ces informations au moyen du dispositif de sécurité, le procédé étant exécuté avec un système de communication selon l'une des revendications 1 à 5.
